# EUROPÄISCHE PATENTSCHRIFT

(11) **EP 1 411 781 B1**
(45) Veröffentlichungstag und Bekanntmachung des Hinweises auf die Patenterteilung: **25.01.2006**
(21) Anmeldenummer: 02747179.6
(22) Anmeldetag: 29.05.2002
(51) Int. Cl.: A23K 1/16

(54) **ZUSATZSTOFF FÜR FUTTERMITTEL ODER FÜR TRINKWASSER**
ADDITIVE FOR USE IN FEEDING STUFF OR DRINKING WATER
ADJUVANT POUR PRODUIT D'ALIMENTATION ANIMALE OU POUR L'EAU A BOIRE DESTINEE AUX ANIMAUX

(30) Priorität: 31.07.2001 DE 10137191
(43) Veröffentlichungstag der Anmeldung: 28.04.2004
(73) Patentinhaber: Berg & Schmidt GmbH & Co., 20099 Hamburg (DE)
(72) Erfinder: GHYCZY, Miklos, 50933 Köln (DE)
(74) Vertreter: Lau-Loskill, Philipp
(86) Internationale Anmeldenummer: PCT/DE2002/001979
(87) Internationale Veröffentlichungsnummer: WO 2003/011047

(56) Entgegenhaltungen:
- WO-A-00/36929
- WO-A-99/04784
- WEISS, R. C.: "Immunological responses in helathy random-source cats fed N,N-dimethylglycine-supplemented diets" AMERICAN JOURNAL OF VETERINARY RESEARCH., Bd. 53, Nr. 5, 1992, Seiten 829-833, XP008008760 XX, XX ISSN: 0002-9645
- HARIGANESH, K., AND PRATHIBA, J.: "Effect of Dimethylglycine on Gastric Ulcers in Rats" JOURNAL OF PHARMACY AND PHARMACOLOGY, Bd. 52, Nr. 12, 2000, Seiten 1519-1522, XP008008761
- HEMAVATHY, J. AND PRABHAKAR, J. V.: "Lipid composiiton of Rice(oryza sativa L.) bran" JOURNAL OF THE AMERICAN OIL CHEMISTS' SOCIETY., Bd. 64, Nr. 7, 1987, Seiten 1016-1019, XP002215198 AMERICAN OIL CHEMISTS' SOCIETY. CHAMPAIGN., US ISSN: 0003-021X

## Beschreibung

Die vorliegende Erfindung betrifft einen Zusatzstoff für Futtermittel oder Trinkwasser für Tiere mit den Merkmalen des Oberbegriffs des Patentanspruchs 1, die Verwendung dieses Zusatzstoffes sowie ein Futtermittel, das den Zusatzstoff enthält.

Futtermittel im Sinne der vorliegenden Beschreibung sind alle Stoffe oder Stoffgemische, die dazu bestimmt sind, in unverändertem, zubereitetem, bearbeitetem und/oder verarbeitetem Zustand an Tiere verfüttert zu werden, während der Begriff Zusatzstoffe solche Stoffe und Stoffgemische abdeckt, die zu einem Futtermittel oder dem Trinkwasser für Tiere zugesetzt werden, um hierdurch dieses Futtermittel oder das von den Tieren aufgenommene Trinkwasser bezüglich seiner Eigenschaften gezielt zu verändern und/oder zu verbessern.

Zu den Patentanmeldungen des Standes der Technik, die Futtermittelzusammensetzungen betreffen, gehören die WO 99/04784 und die WO 00/36929. In der WO 99/04784 werden leistungsfördernde Futtermittelzusätze beschrieben, die Betain und/oder Dimethylglycin enthalten, während aus der WO 00/36929 ein Tierfutter bekannt ist, das einen Zusatz von N-Acyl-Ethanolamin und N-Acyl-Phosphatidylethanolamin aufweist.

Tiere wie insbesondere Rinder, Schweine, Pferde, Schafe, Geflügel, Kaninchen, Katzen, Hunde, Fische und Ziergeflügel, sollten um ihre maximale Leistung erbringen zu können, unter optimalen Bedingungen gehalten und ernährt werden. Hierzu ist jedoch oftmals festzustellen, daß abhängig von den jeweils vorhandenen Umständen, insbesondere von der Art der Haltung der Tiere, so beispielsweise der pro Tier zur Verfügung stehenden Fläche oder der Haltung der Tiere in offenen Freiflächen oder geschlossenen Ställen, den Umweltfaktoren, wie bei-spielsweiseTemperatur, Luftqualität, Luftfeuchtigkeit und Lichtintensität am jeweiligen Haltungsort, der tiermedizinischen Betreuung und Behandlung, der Art der Fütterung und der Futterqualität sowie der Behandlung der Tiere, insbesondere auch bei einer Gruppenhaltung, einen unterschiedlich intensiven Streß erleiden. Dieser Streß drückt sich z.B. in einem unzureichenden Wachstum, in einer unbefriedigenden Produkterzeugungsrate, so beispielsweise in einer reduzierten Menge an Eiern oder Milch, oder in einer reduzierten Fleischqualität aus. Weiterhin führt diese Streßbelastung zu ernsthaften Erkrankungen der Tiere und teilweise auch zu ihrem Tod, wobei die zuvor aufgeführten und durch Streßbelastung hervorgerufenen Beeinflussungen und Störungen nicht abschließend dargelegt sind.

Um die negativen Folgen der Streßbelastung von Tieren zu minimieren, ist es bekannt, den Futtermittel und/oder dem Trinkwasser Zusatzstoffe zuzusetzen, wobei über diese Zusatzstoffe beispielsweise dem Tierfutter bzw. dem Trinkwasser bestimmte weitere Nährstoffe, Proteine, Fette, Öle, Enzyme oder Mineralien zuzuführen. Eine besondere Gruppe der Zusatzstoffe umfaßt auch Antibiotika unterschiedlicher pharmazeutischer Zusammensetzungen, wobei ein wesentlicher Ziel dieser Antibiotika darin zu sehen ist, daß die durch Streßbelastung hervorgerufenen Erkrankungen der Tiere durch den regelmäßigen antibiotischen Zusatz zum Futtermittel oder dem Trinkwasser reduziert bzw. geheilt werden.

Derartige, Antibiotika oder sonstige pharmazeutische Wirkstoffe enthaltenen Zusatzstoffe für Futtermittel und Trinkwasser weisen jedoch den entscheidenden Nachteil auf, daß hierdurch die Antibiotika bzw. die sonstigen pharmazeutischen Wirkstoffe, die das Tier zusammen mit dem Futtermittel aufnimmt, in die menschliche Nahrungskette gelangt, so daß letztendlich der Verbraucher des jeweiligen tierischen Produktes ungewollt und unkontrolliert Antibiotika oder sonstige pharmazeutische Wirkstoffe seinem menschlichen Körper zuführt, was ggf. weitreichende Folgen für den menschlichen Körper haben kann. So ist es beispielsweise bekannt, daß über die tierischen Produkte aufgenommenen Antibiotika im menschlichen Körper gegen diese Antibiotika resistente Mikroorganismen, insbesondere auch Bakterien, erzeugen, so daß bei einer ernsthaften Erkrankung des menschlichen Körpers nur noch wenige, spezielle Antibiotika zur Verfügung stehen, um hier eine Heilung des Menschen zu erreichen. Desweiteren wird durch die unkontrollierte, über Tierprodukte aufgenommenen pharmazeutischen Wirkstoffe das Immunsystem des Menschen beeinträchtigt und insbesondere geschwächt, was zu einer Reihe von menschlichen Folgeerkrankungen führt.

Der vorliegenden Erfindung liegt die Aufgabe zugrunde, einen Zusatzstoff für Futtermittel und/oder Trinkwasser für Tiere zur Verfügung zu stellen, durch den die bei der Tierhaltung auftretenden Streßbelastung unter Verwendung von unbedenklichen, im Zusatzstoff vorhandenen Inhaltsstoffen erheblich reduziert wird.

Diese Aufgabe wird erfindungsgemäß durch einen Zusatzstoff für ein Futtermittel oder für Trinkwasser für Tiere mit den kennzeichnenden Merkmalen des Patentanspruchs 1 gelöst.

Der erfindungsgemäße Zusatzstoff für ein Futtermittel oder für Trinkwasser für Tiere, insbesondere für ein Futtermittel bzw. für Trinkwasser für Rinder, Pferde, Schweine, Schafe, Geflügel, Kaninchen, Katzen, Hunde, Fische und Ziergeflügel, sieht vor, daß hierbei der erfindungsgemäße Zusatzstoff ein Gemisch ist und daß das Gemisch wenigstens die nachfolgend unter a) bis c) aufgeführten Komponenten, die somit Mindestinhaltsstoffe des erfindungsgemäßen Zusatzstoffes sind,
a) Cholin, Betain, Carnitin, Methylmethionin und/oder Phosphatidylcholin,
b) N-Acyl-Ethanolamin und/oder N-Acyl-Phosphatidylethanolamin mit einem C₁-C₂₂-Acylrest und
c) Methylglycin und/oder Dimethylglycin

aufweist.

Mit anderen Worten stellt somit der erfindungsgemäße Zusatzstoff im einfachsten Fall ein Gemisch dar, das aus den zuvor aufgeführten Komponenten a) bis c) besteht.

Überraschend konnte bei der Anwendung des erfindungsgemäßen Zusatzstoffes festgestellt werden, daß durch regelmäßige tägliche Gabe des erfindungsgemäßen Zusatzstoffes wirksam die insbesondere aus den Lebensumständen der Tiere resultierenden Streßbelastungen derselben eliminiert oder zumindestens im erheblichen Umfang reduziert werden, wobei als besonderer Vorteil zu den vorstehend genannten Komponenten a) bis c) festzuhalten ist, daß diese Komponenten in allen aeroben Lebewesen und somit im tierischen, pflanzlichen und menschlichen Organismus vorkommen. Von daher beruht somit der erfindungsgemäße Zusatzstoff auf dem Grundgedanken, dem diesbezüglichen Futtermittel oder Trinkwasser ein Gemisch von ohnehin natürlich im Körper vorkommenden Komponenten a) bis c) zuzusetzen, um so die Streßbelastungen und die hierauf beruhenden Folgeerscheinungen und Folgeerkrankungen zu eliminieren bzw. zumindestens zu reduzieren.

Als Erklärung für die positive Eigenschaften des in dem erfindungsgemäßen Zusatzstoff enthaltenen Gemisches der vorstehend aufgeführten Komponenten a) bis c) wird angenommen, daß gerade dieses Gemisch bei einer Streßbelastung des tierischen Körpers, die mit einer Störung der Energieumwandlung im tierischen Körper und der damit verbundenen zuviel und/oder an der falschen Stelle erzeugten Elektronen und/oder die fehlende oder zu geringe Sauerstoffzufuhr einhergeht, in einem solch hohen Maße abpuffert, was durch die Einzelkomponenten a), b) oder c) allein nicht der Fall ist. Von daher besitzt dieses, die Komponenten a) bis c) aufweisendes Gemisch einen synergistischen Effekt, um auf die zuvor angesprochene Störung der Energieumwandlung im tierischen Körper und der damit verbundenen Streßbelastung positiv zu reagieren, wobei diese Störung bzw. der Streß letztendlich für eine Zellschädigung und damit auch für eine Organ- und Organismusschädigung verantwortlich ist.

Wird nunmehr durch gemeinsame Gabe der Komponenten a) bis c), die als Gemisch in dem erfindungsgemäßen Zusatzstoff zwingend enthalten sein müssen, aufgrund ihrer synergistischen Wirkung diese Energieumwandlungsstörung im tierischen Körper wirksam vermieden oder bei deren Auftreten wirksam aufgefangen, so führt dies dazu, daß der auf das Tier einwirkende Streß eliminiert oder im erheblichen Umfang reduziert wird. Hieraus folgt, daß die durch regelmäßige Gabe des erfindungsgemäßen Zusatzstoffes gefütterten oder getränkten Tiere auch ohne zusätzliche medikamentöse Behandlung und insbesondere auch ohne Antibiotika-Gabe im Vergleich zu herkömmlich gefütterten bzw. getränkten Tieren und auch im Vergleich zu mit Antibiotika behandelten Tieren insbesondere ein deutlich gestärktes Immunsystem besitzen, eine wesentlich reduzierte Erkrankungsrate aufweisen, eine höhere Gewichtszunahme zeigen, eine deutlich geringere Mortalitätsrate haben und insgesamt ein wesentlich gesünderes Aussehen besitzen. Dies wiederum führt dazu, daß durch Anwendung des erfindungsgemäßen Zusatzstoffes im Futtermittel bzw. im Trinkwasser die hiermit gefütterten bzw. getränkten Tiere im Vergleich zu den zuvor genannten herkömmlich gefütterten bzw. getränkten Tiere eine wesentlich höhere Produktivität besitzen, die sich einerseits in der Qualität und der Menge der Tierprodukte, wie beispielsweise Milch oder Eier, und andererseits in einer entsprechend hohen Fleischqualität ausdrückt. Desweiteren konnte insbesondere auch bei Zuchttieren festgestellt werden, daß die Gabe des erfindungsgemäßen Zusatzstoffes zum Futtermittel bzw. zum Trinkwasser nicht nur eine Stabilisierung der Gesundheit während der Tragezeit des Muttertiers sondern auch eine Vergrößerung der Anzahl der pro Wurf gesetzten Jungtiere ergab, wobei gleichzeitig die diesbezüglichen Jungtiere im Vergleich zu den herkömmlich gefütterten bzw. herkömmlich getränkten Muttertieren ein wesentlich höheres Geburtsgewicht aufwiesen.

Als ein wesentlicher weiterer Vorteil des erfindungsgemäßen Zusatzstoffes ist festzuhalten, daß durch Anwendung des aus mindestens den natürlichen Komponenten a) bis c) bestehenden Gemisches beim Tier keine Inhaltsstoffe oder deren Metaboliten in die menschliche Nahrungskette gelangen, die kurz- oder langfristig einen negativen Einfluß auf den menschlichen Organismus nehmen, wie dies bei den eingangs geschilderten und in den bekannten Zusatzstoffen enthaltenen pharmazeutischen Wirkstoffen und insbesondere den Antibiotika bekannt ist.

Wie anhand von Vergleichsversuchen festgestellt werden konnte, sind diese Vorteile dann nicht vorhanden, wenn bei dem in der erfindungsgemäßen Zusammensetzung vorhandenen Gemisch eine Komponente oder auch zwei Komponenten dieses stets die drei Komponenten a) bis c) aufweisenden Gemisches fehlt bzw. fehlen, so daß dieses Dreiergemisch in seinen vorteilhaften Eigenschaften einen über die additiven Wirkungen hinausgehenden synergistischen Effekt besitzt.

Bei einer ersten Ausführungsform des erfindungsgemäßen Zusatzstoffes weist das Gemisch als Komponente a) ein Glycerophosphocholin, das auch als Glycerophosphatidylcholin bezeichnet wird, und/oder ein Lyso-Phosphatidylcholin auf, wobei derartige Phospholipide, die auch in den tierischen Zellsystemen natürlicherweise vorhanden sind, in besonders guter Weise die zuvor beschriebene Steuerung der Energieumwandlung bewirken und das Auftreten von Streß vermeiden.

Bezüglich des in dem erfindungsgemäßen Zusatzstoff für ein Futtermittel oder für Trinkwasser für Tiere enthaltenen Betains ist festzuhalten, daß der erfindungsgemäße Zusatzstoff das Betain selbst oder insbesondere eine Fettsäure und/oder ein Fettsäuresalz des Betains und/oder eine Mischung aus Betain mit mindestens einer Fettsäure und/oder einem Fettsäuresalz als Komponente a) enthalten kann. Weist der erfindungsgemäße Zusatzstoff eine Mischung aus Betain mit mindestens einer Fettsäure auf, so werden hierdurch nicht nur die zuvor bei dem erfindungsgemäßen Zusatzstoff beschriebenen besonderen Vorteile zur Verfügung gestellt, sondern gleichzeitig dient diese Fettsäure als zusätzlicher Energieträger, was auch auf den Fall zutrifft, wenn der Zusatzstoff als Komponente a) ein Fettsäuresalz des Betains enthält.

Bezüglich der Fettsäure in dem Fettsäuresalz des Betains oder der Fettsäure in der Mischung aus Betain mit mindestens einer Fettsäure bzw. der Mischung aus Betain mit mindestens einem Fettsäuresalz ist festzuhalten, daß hierfür insbesondere gesättigte und unverzweigte Fettsäuren in Frage kommen, wobei die diesbezüglichen Fettsäuren bzw. Fettsäuresalze eine Kohlenstoffhauptkette insbesondere mit 12 bis 22 Kohlenstoffatomen besitzt. Besonders geeignet ist es hierbei, wenn die Fettsäure aus Palmölen isoliert werden und insbesondere hauptsächlich somit Palmitinsäure aufweisen, wobei vorzugsweise die Palmitinsäurekonzentration dann zwischen 65 Gew.% und 85 Gew.% variiert. Weitere geeignete Fettsäuren sind dann insbesondere Stearinsäure sowie Ölsäure und/oder Linolsäure, wobei die Fettsäure bzw. das Fettsäuresalz nicht nur als einzelne, konkrete Fettsäure bzw. als einzelnes, konkretes Fettsäuresalz sondern auch als Mischung von verschiedenen Fettsäuren bzw. Fettsäuresalzen vorliegen kann, so insbesondere auch als Mischung aus Palmitinsäure, Stearinsäure, Ölsäure und/oder Linolsäure bzw. deren Salze.

Als ein Beispiel für eine derartige bevorzugte Fettsäuremischung ist eine aus Palmöl fraktionierte Fettsäuremischung zu benennen, die insbesondere zwischen 70 Gew.% und 80 Gew.% Palmitinsäure, zwischen 5 Gew.% und 10 Gew.% Stearinsäure, zwischen 5 Gew.% und 15 Gew.% Ölsäure und zwischen 3 Gew.% und 8 Gew.% Linolsäure enthält, wobei die Konzentration an solchen Fettsäuren, deren Kohlenstoffkette unter C₁₄ liegt, insbesondere kleiner als 2 Gew.% ist.

Die zuvor aufgeführten Fettsäuren bzw. deren Salzen bilden dann zusammen mit einem Betain und einem Cholin-Derivat, insbesondere Phosphatidylcholin, Lysophosphatidylcholin und/oder Glycerophosphatidylcholin, entsprechende Mizellen, die nicht nur die Resorption der Fettsäuren im tierischen Organismus weiter optimieren sondern auch gleichzeitig sicherstellen, daß das zugesetzte Betain zusammen mit den Komponenten b) und c) des Gemisches dann ebenfalls schnell vom Körper resorbiert wird.

Als besonders geeignete Fettsäuresalze des Betains sind Betainlaurat, Betainmyristat, Betainpalmitat, Betainstearat, Betainoleat und/oder Betainlinolat jeweils allein oder in einer Mischung, vorzugsweise mit vorgegebenen Betainsalzen, zu nennen.

Wie bereits eingangs bei dem erfindungsgemäßen Zusatzstoff ausgeführt wurde, weist dieser vorzugsweise als Komponente b) N-Acyl-Ethanolamin und/oder N-Acyl-Phosphatidylethanolamin auf, wobei der Acylrest der zuvor genannten beiden Ethanolamine zwischen C₁-C₂₂ variiert.

Besonders geeignet ist es jedoch, wenn in dem erfindungsgemäßen Zusatzstoff als Komponente b) ein N-Acyl-Ethanolamin enthalten ist, das vorzugsweise einen C₁₀-C₁₈-Acylrest aufweist, wobei hier als besonders bevorzugte N-Acyl-Ethanolamine das N-Oleoyl-Ethanolamin, N-Linolenoyl-Ethanolamin, N-Cocoyl-Ethanolamin, N-Palmitinoyl-Ethanolamin, N-Capronoyl-Ethanolamin, N-Capryloyl-Ethanolamin, N-Caprinoyl-Ethanolamin, N-Laurinoyl-Ethanolamin und/oder N-Myristinoyl-Ethanolamin, jeweils allein oder in Mischung zu nennen sind.

Wie bereits eingangs bei dem erfindungsgemäßen Zusatzstoff herausgestellt worden ist, enthält der erfindungsgemäße Zusatzstoff als Komponente c) Methylglycin, Dimethylglycin oder eine Mischung von Methylglycin mit Dimethylglycinen, wobei beim Vorliegen der Mischung aus Methylglycin und Dimethylglycin ein Massenverhältnis von Methylglycin:Dimethylglycin von 1:1 und 3:1 besonders bevorzugt wird.

Eine besonders geeignete und sich durch eine hohe Wirksamkeit bezüglich der Streßunterdrückung auszeichnende Ausführungsform des erfindungsgemäßen Zusatzstoffes sieht vor, daß dieser eine solches Gemisch enthält, bei dem die Komponente a) aus Betain, die Komponente b) aus N-Acyl-Ethanolamin mit einem überwiegend gesättigten und unverzweigten C₁₀-C₁₈-Acylrest und die Komponente c) aus Methylglycin besteht. Hierbei umfaßt das als Komponente a) vorhandene Betain nicht nur Betain selbst sondern auch die zuvor beschriebene Fettsäuremischung und/oder Fettsäuresalzmischung mit Betain und/oder die vorstehend ebenfalls beschriebenen Fettsäuren des Betains bzw. deren Salze, während das N-Acyl-Ethanolamin insbesondere als Acylreste Caprinsäure, Undecansäure, Laurinsäure, Tridekansäure, Myristinsäure, Pentadekansäure, Palmitinsäure, Magarinsäure und/oder Stearinsäure als Hauptacylreste, insbesondere in einer bevorzugten Konzentration zwischen 70 Gew.% und 90 Gew.%, und Ölsäure sowie Linolsäure, insbesondere in einer Konzentration bis zu 30 Gew.%, als Nebenacylreste enthält, wobei solche Acylreste, die aus maximal 30 Gew.% ungesättigten Fettsäuren und aus minimal 70 Gew.% gesättigten Fettsäuren bestehen, im Rahmen der vorliegenden Beschreibung als überwiegend gesättigte Acylreste bezeichnet werden, während unverzweigte Acylreste überwiegen, d.h. zu mindestens 90 Gew.%, aus linearen Fettsäuren bestehen.

Das Massenverhältnis der zuvor wiederholt beschriebenen Komponenten a), b) und c) des Gemisches, das in dem erfindungsgemäßen Zusatzstoff enthalten ist, richtet sich danach, ob der Zusatzstoff einerseits dem Futtermittel oder andererseits dem Trinkwasser zugesetzt werden soll und für welche Streßbelastung und bei welchem Tier die jeweilige Ausführungsform des Zusatzstoffes angewandt wird sowie welche konkrete Komponente a), b) und/oder c) in dem erfindungsgemäßen Zusatzstoff enthalten ist. Insbesondere variiert das Massenverhältnis der Komponente a) zur Komponente b) und zur Komponente c) zwischen 1:1:1 und 1:10:1 oder zwischen 1:1:1 und 10:1:1 oder zwischen 1:1:1 und 1:1:10.

Eine besonders vorteilhafte Weiterbildung des erfindungsgemäßen Zusatzstoffes sieht vor, daß hierbei der Zusatzstoff als Komponente a) Betain in einer Konzentration zwischen 18 Gew.% und 25 Gew.%, als Komponente b) N-Acylethanolamin in einer Konzentration zwischen 5 Gew.% und 12 Gew.% und als Komponente c) Methylglycin in einer Konzentration zwischen 0,8 Gew.% und 3 Gew.%, jeweils bezogen auf den anwendungsfertigen Zusatzstoffe, aufweist. Neben diesem Gemisch enthält dann dieser Zusatzstoff insbesondere Kohlehydrate, Phospholipide, Lecithine, Proteine, Enzyme, Mineralstoffe, Vitamine, Spurenelemente, Aminosäuren, Antioxidantien, Fette und/oder Öle, abhängig davon, zu welchem Futtermittel und für welches Tier der erfindungsgemäße Zusatzstoff angewandt wird. Hier hat sich überraschend gezeigt, daß bei Einhaltung der zuvor genannten Konzentrationsangaben für die Komponenten a) bis c) besonders wirksam Streßbeeinflussungen der Tiere und die damit verbundenen Auswirkungen reduziert werden, so daß dementsprechend hiermit gefütterte Tiere eine verringerte Mortalität zeigten.

Eine besonders geeignete Weiterbildung des erfindungsgemäßen Zusatzstoffes sieht vor, daß hierbei der Zusatzstoff als Pulver oder als Granulat vorliegt, um so staubfrei und einfach sowie schnell in einen weiteren Zusatzstoff, der beispielsweise der zusätzlichen Zufuhr von speziellen Nährstoffen dient, in ein Futtermittel oder das Trinkwasser eingebracht und hiermit vermischt zu werden.

Vorzugsweise weist bei der zuvor beschriebenen Ausführungsform des erfindungsgemäßen Zusatzstoffes das Granulat eine Korngröße zwischen 0,5 mm und 20 mm, insbesondere zwischen 3 mm und 8 mm, auf, wobei das Gemisch der Komponenten a) bis c) an einem Trägerstoff sorbiert ist.

Als geeignete Trägerstoffe für die zuvor beschriebene Weiterbildung des erfindungsgemäßen Zusatzstoffes, wenn dieser als Granulat oder Pulver aufgemacht ist, sind Kohlehydrat oder eine Mischung als Kohlenhydraten, insbesondere ein Derivat von Kohlenhydraten und vorzugsweise Maltodextrin, zu nennen, wobei derartige Trägerstoffe dann insbesondere für solche Zusatzstoffe verwendet werden, die in der Mast von Rindern, Schweine oder Schafe oder im Rahmen der Pferdehaltung eingesetzt werden. Im Bereich der Geflügelhaltung werden insbesondere als Trägerstoffe für das aus den Komponenten a) bis c) bestehende Gemisch Stärke oder Stärkederivate verwendet, während bei der Haltung von Hunden oder Katzen vorzugsweise auf festen Fetten basierende Trägerstoffe Anwendung finden.

Neben der zuvor beschriebenen granulierten Ausführungsform des erfindungsgemäßen Zusatzstoffes wird eine weitere Ausführungsform bezüglich ihrer leichten Anwendbarkeit bevorzugt, wobei bei dieser Ausführungsform des erfindungsgemäßen Zusatzstoffes die Mischung aus den Komponenten a) bis c) als wäßrige Lösung oder als wäßrige Dispersion vorliegt.

Um bei einer derartig flüssig formulierten Ausgestaltung des erfindungsgemäßen Zusatzstoffes ein unerwünschtes Entmischen der Bestandteile oder ein Absetzen oder Ausflocken derselben oder der Komponenten a) bis c) sicher zu verhindern, sieht eine weitere, vorteilhafte Ausführungsform des erfindungsgemäßen Zusatzstoffes vor, daß die flüssige Formulierung zusätzlich noch einen Dispergator enthält, wobei hierfür insbesondere ein auf Lecithin und/oder Phospholipiden basierenden Dispergator bevorzugt wird.

Insbesondere dann, wenn die zuvor beschriebene flüssig formulierte Ausführungsform des erfindungsgemäßen Zusatzstoffes als Dispergator Lecithin und vorzugsweise Rohlecithin und/oder ein modifiziertes Lecithin, enthält, läßt sich ein derartiger flüssiger Zusatzstoff besonders preisgünstig erstellen. Besonders geeignete Beispiele für modifizierte Lecithine umfassen acetyliertes Lecithin, hydrolysiertes, insbesondere enzymatisch hydrolysiertes Lecithin, gebleichtes Lecithin, acetyliertes und anschließend hydrolysiertes, entöltes Lecithin und/oder fraktioniertes Lecithin.

Bezüglich der Anwendung der zuvor beschriebenen flüssigen Ausführungsformen des erfindungsgemäßen Zusatzstoffes ist festzuhalten, daß derartige flüssige Ausführungsformen insbesondere gut dem Trinkwasser für die Tiere zugesetzt werden können, um so die erwünschte Zuführung des Zusatzstoffes zu den hiermit getränkten Tieren sicherzustellen. Selbstverständlich kann jedoch auch eine derartige flüssige Formulierung besonders gut und einfach insbesondere mit einem pastösen bis breiigen Futtermittel vermischt werden.

Wie bereits vorstehend bei einer Ausführungsform des erfindungsgemäßen Zusatzstoffes erwähnt ist, besteht die Möglichkeit, den erfindungsgemäßen Zusatzstoff nicht nur zu einem Futtermittel selbst oder dem Trinkwasser sondern auch zu einem weiteren Zusatzstoff zuzusetzen, wobei der weitere Zusatzstoff andere Ergebnisse, so zum Beispiel eine erhöhte Zufuhr an bestimmten Nährstoffen und/oder Mineralien, sicherstellen soll.

Eine besonders geeignete weitere Ausführungsform des erfindungsgemäßen Zusatzstoffes, der flüssig oder insbesondere auch fest und vorzugsweise granulatförmig bzw. pulverförmig vorliegt, sieht vor, daß hierbei der erfindungsgemäße Zusatzstoff neben dem zuvor ausgiebig beschriebenen Gemisch der Komponenten a), b) und c) desweiteren noch mindestens einen zusätzlichen Inhaltsstoff aufweist, der aus der Gruppe ausgewählt ist, die Kohlehydrate, Phospholipide, Lecithine, Proteine, Mineralstoffe, Vitamine, Spurenelemente, Aminosäuren, Antioxidantien, Fette, Enzyme und Öle umfaßt. Hierbei verfolgen diese Kohlehydrate, Phospholipide, Lecithine, Proteine, Mineralstoffe, Vitamine, Spurenelemente, Aminosäuren, Fette, Enzyme und/oder Öle den Zweck, daß den hiermit gefütterten Tieren weitere Energieträger, Enzyme und/oder Mineralien bzw. Spurenelemente und/oder Vitamine zugeführt werden. Sollte eine Ausführungsform des erfindungsgemäßen Zusatzstoffes neben dem aus den Komponenten a) bis c) bestehenden Gemisch noch Enzyme enthalten, so dienen diese Enzyme insbesondere in Verbindung mit solchen Futtermitteln, die Getreide, so beispielsweise Weizen, Roggen, Triticale, Gerste, Hafer und/oder Weizenkleie und/oder Ölsaaten, wie insbesondere Raps und Sojaschrot, enthalten dazu, daß die insbesondere für Schweine und Geflügel ohne externe Enzymgabe nur schwer verdaulichen und in den zuvor genannten Getreiden und Ölsaaten enthaltenen Nicht-Stärke-Polysaccaride durch eine entsprechende Enzymgabe über den Zusatzstoff aufgeschlossen und somit dem Tier als zusätzliche Nährstoffe zugänglich gemacht werden. Antioxidantien verhindern wirksam eine unerwünschte Alterung des erfindungsgemäßen Zusatzstoffes und stellen somit eine dauerhafte Lagerfähigkeit über einen langen Zeitraum sicher.

Eine bevorzugte Weiterbildung der zuvor beschriebenen Ausführungsform des erfindungsgemäßen Zusatzstoffes sieht vor, daß hierbei der erfindungsgemäße Zusatzstoff zwischen
10 - 30 Gew.% Kohlehydrate
5 - 30 Gew.% Proteine
1 - 10 Gew.% Lecithine, vorzugsweise Phospholipide,
1 - 20 Gew.% Fette und/oder Öle und
0,1 - 20 Gew.% des aus den Komponenten a) bis c) bestehenden Gemisches

aufweist, wobei das Gemisch der in dieser Ausführungsform des erfindungsgemäßen Zusatzstoffes vorhandenen Komponenten a) bis c) so variiert werden kann, wie dies zuvor ausführlich beschrieben worden ist.

Insbesondere dann, wenn der erfindungsgemäße Zusatzstoff zwischen
18 - 25 Gew.% Betain
5 - 12 Gew.% N-Acylethanolamin
0,8 - 5 Gew.% Methylglycin
18 - 25 Gew.% Lecithin
38 - 44 Gew.% Maltodextrin und
3 - 9 Gew.% Natrium-Caseinat

enthält, läßt sich eine derartig bevorzugte Ausführungsform des erfindungsgemäßen Zusatzstoffes hervorragend und vielseitig bei der Mast und/oder der Ernährung der vorstehend aufgeführten Tiere einsetzen, mit der Folge, daß eine deutlich erhöhte Gewichtszunahme, eine Verringerung der Mortalität, eine Reduzierung der Streßbelastung und/oder ein ausgeglichenes und tiergemäßes Verhalten resultieren.

Eine besonders geeignete Weiterbildung der zuvor beschriebenen Ausführungsform des erfindungsgemäßen Zusatzstoffes sieht vor, daß hierbei der Zusatzstoff aus
21 - 23 Gew.% Betain
7 - 8 Gew.% N-Palmitinoyl-Ethanolamin
1,5 - 2,5 Gew.% Methylglycin
21 - 23 Gew.% entöltes Lecithin
39 - 42 Gew.% Maltodextrin und
5,5 - 6,5 Gew.% Natrium-Caseinat

besteht. Diese Ausführungsform läßt sich insbesondere hervorragend in der Mast von Rindern, Schweinen, Schafen und/oder Geflügel einsetzen und zeichnet sich desweiteren neben den bereits vorstehend erwähnten Vorteilen trotz des relativ hohen Gehaltes an Lecithin durch eine besonders gute Lagerfähigkeit aus.

Wie bereits mehrfach herausgestellt wurde, wird vorzugsweise der erfindungsgemäße Zusatzstoff dem Futtermittel und/oder dem Trinkwasser für Tiere, insbesondere dem Futtermittel und/oder dem Trinkwasser für Rinder, Pferde, Schweine, Schafe, Geflügel, Kaninchen, Katzen, Hunde, Fische und Ziergeflügel, zugemischt, wobei es sich bei diesen Futtermitteln insbesondere um grüne Futterpflanzen und ihre Konservate, Stroh, Spreu, Schalen, Hülsen, Wurzeln, Knollen oder fleischige Früchte, Körner, Samen, industriell hergestellte Produkte, Futtermittel tierischer oder chemischer Herkunft oder auch um Mischfuttermittel handeln kann.

Um eine ausreichende Versorgung der diesbezüglichen Tiere mit dem erfindungsgemäßen Zusatzstoff sicherzustellen, wird insbesondere der erfindungsgemäße Zusatzstoff in einer Konzentration dem Futtermittel, einem weiteren Zusatzstoff und/oder dem Trinkwasser zugemischt, daß dem Tier mit der Aufnahme des Futtermittels, des weiteren Zusatzstoffes und/oder des Trinkwassers das mindestens aus den Komponenten a) bis c) bestehende Gemisch in einer täglichen Konzentration zwischen 5 mg bis 2.000 mg, vorzugsweise zwischen 25 mg und 500 mg, jeweils pro Kilogramm Lebendgewicht, zugeführt wird. Hier hat sich gezeigt, daß insbesondere bei Einhaltung der zuvor angegebenen Konzentrationsbereiche, unabhängig vom jeweiligen Tier, alle die Vorteile erreicht werden können, wie sie eingangs für den erfindungsgemäßen Zusatzstoff ausgiebig beschrieben sind.

Desweiteren betrifft die vorliegende Erfindung ein Futtermittel, das den erfindungsgemäßen Zusatzstoff in allen den zuvor beschriebenen Ausführungsformen enthalten kann. Für dieses Futtermittel gelten analog die Vorteile, wie sie vorstehend umfangreich für den erfindungsgemäßen Zusatzstoff beschrieben sind.

Eine besonders geeignete und vorteilhafte Weiterbildung des erfindungsgemäßen Futtermittels sieht vor, daß hierbei das Futtermittel den zuvor umfangreich beschriebenen Zusatzstoff in einer Konzentration zwischen 200 g/t Futter und 1.000 g/t Futter, insbesondere in einer Konzentration zwischen 450 g/t Futter und 550 g/t Futter und vorzugsweise in einer Konzentration von 500 g/t Futter aufweist.

Insbesondere wird als Methylmethionin in dem erfindungsgemäßen Zusatzstoff ein Salz von Methylmethionin und vorzugsweise S-Methyl-DL-Methionin-Sulfoniumchlorid verwendet.

Vorteilhafte Weiterbildungen des erfindungsgemäßen Zusatzstoffes, seiner erfindungsgemäßen Verwendung sowie des erfindungsgemäßen Futtermittels sind in den Unteransprüchen angegeben.

Der erfindungsgemäße Zusatzstoff wird nachfolgend anhand von sechs Ausführungsbeispielen näher erläutert.

### Ausführungsbeispiel 1

Eine Läufergruppe aus 60 Mastschweinen wurde in vier Gruppen zu je 15 Tieren aufgeteilt, wobei jede Tiergruppe voneinander separiert wurde, jedoch alle 60 Mastschweine im selben Stall verblieben.

Die Tiere wurden mit dem gleichen Basis-Futtermittel über eine Mastdauer von 30 Tagen gefüttert, wobei die Schweine aus Gruppe 2 und aus Gruppe 4 nur dieses Basisfuttermittel erhielten, während dem Basisfuttermittel für die Schweine der Gruppe 1 und 3 der nachfolgend wiedergegebene Zusatzstoff I homogen zugemischt wurde. Hierbei war die Menge des dem Futtermittel für die Tiere der Gruppe 1 und 3 zugemischten Zusatzstoffes I so groß, daß jedem Schwein dieser Gruppen (1 und 3) pro Tag 500 mg Zusatzstoff I pro Kilogramm Körpergewicht zugeführt werden konnte.

Die Luft in dem Mastschweinestall wies eine hohe Ammoniakbelastung auf.

Nach Ablauf der vorgesehen Mastdauer wurden alle Tier visuell auf ihren Gesundheitszustand beurteilt, wobei die Mastschweine der Gruppen 1 und 3 im Vergleich zu den Schweinen der Kontrollgruppen 2 und 4 ein subjektiv empfundenes gesünderes Aussehen vermittelten, sich wesentlich ruhiger verhielten und desweiteren weniger schreckhaft waren.

Der Mittelwert der Endgewichte der Mastschweine aus Gruppe 1 lag um 3,4 % und der Mittelwert der Endgewichte der Mastschweine aus der Gruppe 3 lag um 3,2 % höher als der Mittelwert der Endgewichte der Schweine aus den Gruppen 2 und 4.

Der dem Futtermittel der den Gruppen 1 und 3 zugeteilten Schweine zugemischte Zusatzstoff I wies als Inhaltsstoff Betain, N-Palmitinoyl-Ethanolamin und Methylglycin auf, wobei das Massenverhältnis der zuvor genannten drei Komponenten 1:1:1 betrug.

### Ausführungsbeispiel 2

Eine weitere Läufergruppe von 60 Tieren wurde in vier Gruppen zu je 15 Tieren aufgeteilt, wobei die gruppenweise separierten Schweine im selben Stall verblieben, der ebenfalls eine hohe Ammoniakbelastung aufwies. Alle Tiere erhielten ein identisches Basis-Futtermittel, wobei dem Futtermittel für die Gruppe 1 der vorstehend beschriebene Zusatzstoff I, dem Futtermittel für die Gruppe 2 Betain, dem Futtermittel für die Gruppe 3 N-Palmitoyl-Ethanolamin und dem Futtermittel für die Gruppe 4 Methylglycin zugemischt wurde.

Hierbei wurde eine solche Menge Zusatzstoff I bzw. Betain bzw. N-Palmitoyl-Ethanolamin bzw. Methylglycin den jeweiligen Futtermitteln zugesetzt, das jedes Schwein täglich 150 mg pro Kilogramm Körpergewicht des zuvor genannten Gemisches bzw. der Einzelkomponenten aufnehmen konnte.

Nach einer Mastdauer von 50 Tagen wurden die Schweine aus jeder Gruppe gewogen.

Als Ergebnis dieses Versuches ist festzuhalten, daß das Durchschnittsgewicht der Schweine aus den Gruppen 2 bis 4 nahezu identisch war und sich maximal um 0,3 % unterschied, während die Schweine der Gruppe 1 im Vergleich hierzu ein um 3,3 % höheres Endgewicht aufwiesen.

Die Beurteilung der Schlachtkörperqualitäten der Schweine aus den Gruppen 1 und 3 des Ausführungsbeispiels 1 und der Schweine aus der Gruppe 1 des Ausführungsbeispiels 2 im Vergleich zu den entsprechenden Schweinen aus den Gruppen 2 bis 4 (Ausführungsbeispiel 2) ergab, daß die Schlachtkörperqualität der Schweine der Gruppen 1 und 3 (Ausführungsbeispiel 1) und die Schlachtkörperqualität der Schweine aus der Gruppe 1 (Ausführungsbeispiel 2) untereinander gleich, jedoch im Vergleich zu den Schlachtkörpern der Schweine aus Gruppe 1 und 3 (Ausführungsbeispiel 1) bzw. zu den Schlachtkörpern der Schweine aus den Gruppen 2 bis 4 (Ausführungsbeispiel 2) wesentlich höher bewertet wurde.

### Ausführungsbeispiel 3

Drei Broilerherden von jeweils 12.000 Tieren in nebeneinander liegenden, luftmäßig miteinander verbundenen Ställen wurden vergleichend bewertet. Die erste Broilerherde A wurde mit einem Futtermittel versorgt, dem ein Zusatzstoff II, der aus einem Gemisch aus Methylmethionin, N-Laurinoyl-Ethanolamin und Methylglycin in einem Massenverhältnis von 1:1:2 zugesetzt wurde, die zweite Broilerherde B wurde mit einem Futtermittel, dem ein antibiotischer, herkömmlicher Zusatzstoff beigemischt wurde und die dritte Broilerherde wurde mit einem Futtermittel, das keinerlei Zusatzstoffe enthielt, versorgt, wobei der Zusatzstoff II in einer solchen Menge dem Futtermittel der Broilerherde A zugesetzt wurde, daß die tägliche Aufnahme des Zusatzstoffes II von jedem Broiler 30 mg pro Kilogramm Lebendgewicht betrug.

Die Anwendung des herkömmlichen Zusatzstoffes im Futtermittel der Broilerherde B erfolgte nach Angaben des Herstellers.

Über einen Zeitraum von vier Wochen wurden die durch Tod bedingten Verluste an Broilern ermittelt, wobei die Anzahl toter Tiere bei der Broilerherde C als 100 % gewertet wurde. Im Vergleich zur Broilerherde C wies die Broilerherde B 10 % weniger Todesfälle auf, während bei der Broilerherde A im Vergleich zur Broilerherde C 25 % weniger Todesfälle verzeichnet wurden.

### Ausführungsbeispiel 4

Eine Milchkuhherde mit 80 Tieren mit ganztägig offenem Auslauf wurde in zwei Gruppen zu je 40 Tieren aufgeteilt. Beide Gruppen erhielten ein identisches Leistungsfutter, wobei dem Leistungsfutter der einen Gruppe A ein Zusatzstoff III zugemischt wurde, der aus Phosphatidylcholin, N-Myristinoyl-Ethanolamin und Dimethylglycin in einem Massenverhältnis von 1:2:2 bestand. Hierbei war die Menge dieses Zusatzstoffes III so berechnet, daß jede Kuh pro Tag und pro Kilogramm Lebendgewicht 200 mg des Zusatzstoffes III über das Leistungsfutter aufnehmen konnte. Die zweite Gruppe Kühe B erhielt das Leistungsfutter ohne jeglichen Zusatz.

Bei den Kühen der Gruppe A stieg über einen Zeitraum von zwei Wochen nach Gabe des mit dem Zusatzstoff III versetzten Leistungsfutters die Milchleistung im Mittel um 1,8 1/Tier und Tag an und verblieb dann während der Gabe des Zusatzstoffes III konstant, verglichen mit der Milchleistung der Kühe der Gruppe B.

Aufgrund von subjektiven Beobachtungen entstand der Eindruck, daß sich die Tiere der Gruppe A auch bei starkem Sonnenschein häufiger im Freien aufhielten als die Tiere der Gruppe B, die den Schatten des Stalles aufsuchten. Weiterhin war die Vitalität der Kühe der Gruppe A größer als die Vitalität der Kühe der Gruppe B, während die Kühe der Gruppe A zusätzlich noch neugieriger und weniger schreckhaft waren als die Kühe der Gruppe B.

### Ausführungsbeispiel 5

8 Ferkel eines Wurfes wurden in zwei willkürliche Gruppen A und B aufgeteilt und voneinander getrennt, jedoch im selben Stall gehalten. Ihre Ernährung wurde mit einem herkömmlichen Ferkelstarter sichergestellt, wobei eine erste, aus vier Ferkeln bestehende Gruppe A einen Ferkelstarter erhielt, dem ein Zusatzstoff IV zugemischt war.

Hierbei enthielt dieser Zusatzstoff IV eine Mischung von Betain, N-Palmitinoyl-Ethanolamin und Methylglycin im Massenverhältnis von 1:1:1 . Die Menge des Zusatzstoffes IV war dem Ferkelstarter so zudosiert, daß jedes Ferkel pro Kilo Lebendgewicht 800 mg Zusatzstoff IV pro Tag aufnehmen konnte.

Die vier, der Gruppe B zugeteilten Ferkel erhielten nur den Ferkelstarter, ohne jeglichen Zusatzstoff.

Auffallend war, daß die Ferkel der Gruppe A im Vergleich zu den Ferkeln der Gruppe B die Absetzphase wesentlich besser vertrugen und weniger Umstellprobleme zeigten, kaum trauerten, keine Wachstumsstillstände aufwiesen und zügig weiterfraßen. Insbesondere traten bei keinem Ferkel der Gruppe A Durchfälle auf, während zwei Ferkel der Gruppe B jeweils über eine Woche, jedoch zeitversetzt, an Durchfall erkrankten.

### Ausführungsbeispiel 6

Es wurde ein Zusatzstoff V erstellt, wobei dieser Zusatzstoff V folgende Inhaltsstoffe aufwies:
22 Gew.% Betain
7,65 Gew.% Palmitamide-MEA (N-Palmitinoyl-Ethanolamin)
1,87 Gew.% Methylglycin
22 Gew.% entöltes Lecithin
40,29 Gew.% Maltodextrin und
6,2 Gew.% Natrium-Caseinat

Zur Herstellung dieses Zusatzstoffes V wurde aus den Inhaltsstoffen Betain, Methylglycin und Lecithin eine Vormischung hergestellt.

Hiernach wurde Wasser vorgelegt und auf 70 °C erwähnt. In dieses Wasser wurde die entsprechende Menge Maltodextrin und Natrium-Caseinat eingerührt. Nach Erstellung einer homogenen Mischung wurde die zuvor beschriebene Vormischung aus Betain, Methylglycin und Lecithin homogen untergerührt. Nach Zusatz einer wäßrigen Lösung von Acetamid-MEA wurde die so hergestellte flüssige Phase bei 120 bar homogenisiert. Hiernach schloß sich eine schonende Sprühtrocknung unter Ausbildung des pulverförmigen Zusatzstoffes V an.

Für einen Fütterungsversuch an Kälbern (9 Monate alt) wurde der Zusatzstoff V in einer Konzentration von 500 g/t Futter eingesetzt. Hierbei wurde die aus 60 Kälbern bestehende Ausgangsgruppe zu zwei jeweils 30 Kälber aufweisende Testgruppen aufgeteilt, wobei die Ausgangsgruppe im selben Stall verblieb.

Die erste Testgruppe A aus 30 Kälbern wurde über einen Zeitraum von sechs Wochen mit dem Futter gefüttert, das keinen Zusatzstoff V enthielt.

Die zweite Testgruppe B aus 30 Kälbern wurde über einen Zeitraum von sechs Wochen mit dem Futter gefüttert, das den Zusatzstoff V in der Konzentration von 500 g/t Futter enthielt, wobei das Basisfutter bei beiden Testgruppen A und B identisch war.

Nach Ablauf der Testzeit wurden die Kälber gewogen. Hierbei lag der Mittelwert des Endgewichtes der Kälber der Testgruppe B um 4,4 % höher als der Mittelwert des Endgewichtes der Kälber der Testgruppe A.

## Patentansprüche

1. Zusatzstoff für ein Futtermittel oder für Trinkwasser für Tiere, insbesondere für Rinder, Schweine, Pferde, Schafe, Geflügel, Kaninchen, Katzen, Hunde, Fische und Ziergeflügel, **dadurch gekennzeichnet, daß** der Zusatzstoff ein Gemisch ist und daß das Gemisch wenigstens die nachfolgend unter a) bis c) aufgeführten Komponenten
a) Cholin, Betain, Carnitin, Methylmethionin und/oder Phosphatidylcholin,
b) N-Acyl-Ethanolamin und/oder N-Acyl-Phosphatidylethanolamin mit einem C₁-C₂₂-Acylrest und
c) Methylglycin und/oder Dimethylglycin
aufweist.

2. Zusatzstoff nach Anspruch 1, **dadurch gekennzeichnet, daß** das Cholin ein Glycerophosphocholin und/oder ein Lyso-Phosphatidylcholin ist.

3. Zusatzstoff nach Anspruch 1 oder 2, **dadurch gekennzeichnet, daß** der Zusatzstoff als Betain, eine Fettsäure und/oder ein Fettsäuresalz des Betains und/oder eine Mischung aus Betain mit mindestens einer Fettsäure und/oder einem Fettsäuresalz enthält.

4. Zusatzstoff nach einem der vorangehenden Ansprüche, **dadurch gekennzeichnet, daß** in dem Zusatzstoff als Komponente a) ein Fettsäuresalz des Betains enthalten ist.

5. Zusatzstoff nach Anspruch 4, **dadurch gekennzeichnet, daß** die Fettsäure bzw. das Fettsäuresalz eine Kohlenstoffhauptkette mit 12 bis 22 Kohlenstoffatomen besitzt.

6. Zusatzstoff nach Anspruch 4 oder 5, **dadurch gekennzeichnet, daß** das Fettsäuresalz des Betains eine Betainlaurat, ein Betainmyristat, ein Betainpalmitat, ein Betainstearat, ein Betainoleat und/oder ein Betainlinolat ist.

7. Zusatzstoff nach einem der vorangehenden Ansprüche, **dadurch gekennzeichnet, daß** der Zusatzstoff als Komponente b) N-Acyl-Ethanolamin aufweist, wobei das N-Acyl-Ethanolamin einen C₁₀-C₁₈-Acylrest, vorzugsweise einen überwiegend gesättigten und unverzweigten C₁₀-C₁₈-Acylrest, besitzt.

8. Zusatzstoff nach einem der vorangehenden Ansprüche, **dadurch gekennzeichnet, daß** als N-Acyl-Ethanolamin ein N-Capronoyl-Ethanolamin, N-Capryloyl-Ethanolamin, N-Caprinoyl-Ethanolamin, N-Laurinoyl-Ethanolamin, N-Myristinoyl-Ethanolamin, N-Oleoyl-Ethanolamin, N-Linolenoyl-Ethanolamin, N-Cocoyl-Ethanolamin und/oder N-Palmitinoyl-Ethanolamin in dem Zusatzstoff enthalten ist.

9. Zusatzstoff nach einem der vorangehenden Ansprüche, **dadurch gekennzeichnet, daß** der Zusatzstoff als Komponente a) Betain, als Komponente b) N-Acyl-Ethanolamin mit einem überwiegend gesättigten und unverzweigten C₁₀-C₁₈-Acylrest und als Komponente c) Methylglycin enthält.

10. Zusatzstoff nach einem der vorangehenden Ansprüche, **dadurch gekennzeichnet, daß** das Massenverhältnis der Komponente a) zur Komponente b) und zur Komponente c) zwischen 1:1:1 und 1:10:1 variiert.

11. Zusatzstoff nach einem der vorangehenden Ansprüche 1 bis 9, **dadurch gekennzeichnet, daß** das Massenverhältnis der Komponente a) zur Komponente b) und zur Komponente c) zwischen 1:1:1 und 10:1:1 variiert.

12. Zusatzstoff nach einem der vorangehenden Ansprüche 1 bis 9, **dadurch gekennzeichnet, daß** das Massenverhältnis der Komponente a) zur Komponente b) und zur Komponente c) zwischen 1:1:1 und 1:1:10 variiert.

13. Zusatzstoff nach einem der vorangehenden Ansprüche, **dadurch gekennzeichnet, daß** der Zusatzstoff als Komponente a) Betain in einer Konzentration zwischen 18 Gew.% und 25 Gew.%, als Komponente b) N-Acylethanolamin in einer Konzentration zwischen 5 Gew.% und 12 Gew.% und als Komponente c) Methylglycin in einer Konzentration zwischen 0,8 Gew.% und 3 Gew.%, jeweils bezogen auf den anwendungsfertigen Zusatzstoff, aufweist.

14. Zusatzstoff nach einem der vorangehenden Ansprüche, **dadurch gekennzeichnet, daß** der Zusatzstoff als Pulver oder als Granulat vorliegt.

15. Zusatzstoff nach Anspruch 14, **dadurch gekennzeichnet, daß** das Granulat eine Korngröße zwischen 0,5 mm und 20 mm aufweist, wobei das Gemisch der Komponenten a) bis c) an einem Trägerstoff sorbiert ist.

16. Zusatzstoff nach Anspruch 14 oder 15, **dadurch gekennzeichnet, daß** der Zusatzstoff einen Trägerstoff, insbesondere ein Kohlehydrat und vorzugsweise ein Maltodextrin, enthält.

17. Zusatzstoff nach einem der Ansprüche 1 bis 13, **dadurch gekennzeichnet, daß** der Zusatzstoff eine wäßrige Lösung oder eine wäßrige Dispersion des aus den Komponenten a) bis c) bestehenden Gemisches ist.

18. Zusatzstoff nach Anspruch 17, **dadurch gekennzeichnet, daß** die wäßrige Lösung bzw. Dispersion eine auf Lecithin und/oder Phospholipiden basierenden Dispergator enthält.

19. Zusatzstoff nach Anspruch 18, **dadurch gekennzeichnet, daß** in dem Zusatzstoff als Dispergator Lecithin, insbesondere Rohlecithin und/oder modifiziertes Lecithin, enthalten ist.

20. Zusatzstoff nach einem der vorangehenden Ansprüche, **dadurch gekennzeichnet, daß** der Zusatzstoff neben dem Gemisch desweiteren noch mindestens einen zusätzlichen Inhaltsstoff enthält, der aus der Gruppe ausgewählt ist, die Kohlehydrate, Phospholipide, Lecithine, Proteine, Enzyme, Mineralstoffe, Vitamine, Spurenelemente, Aminosäuren, Antioxidantien, Fette und Öle umfaßt.

21. Zusatzstoff nach Anspruch 20, **dadurch gekennzeichnet, daß** der Zusatzstoff zwischen
10 - 30 Gew.% Kohlehydrate
5 - 30 Gew.% Proteine
1 - 10 Gew.% Lecithine, vorzugsweise Phospholipide,
1 - 20 Gew.% Fette und/oder Öle und
0,1 - 20 Gew.% des aus den Komponenten a) bis c) bestehenden Gemisches
aufweist.

22. Zusatzstoff nach einem der Ansprüche 1 bis 20, **dadurch gekennzeichnet, daß** der Zusatzstoff zwischen
18 - 25 Gew.% Betain
5 - 12 Gew.% N-Acylethanolamin
0,8 - 5 Gew.% Methylglycin
18 - 25 Gew.% Lecithin
38 - 44 Gew.% Maltodextrin und
3 - 9 Gew.% Natrium-Caseinat
enthält.

23. Zusatzstoff nach Anspruch 22, **dadurch gekennzeichnet, daß** der Zusatzstoff
21 - 23 Gew.% Betain
7 - 8 Gew.% N-Palmitinoyl-Ethanolamin
1,5 - 2,5 Gew.% Methylglycin
21 - 23 Gew.% entöltes Lecithin
39 - 42 Gew.% Maltodextrin und
5,5 - 6,5 Gew.% Natrium-Caseinat
enthält.

24. Verwendung des Zusatzstoffes nach einem der vorangehenden Ansprüche zur Zumischung zum Futtermittel und/oder zum Trinkwasser für Tiere, insbesondere für Rinder, Schweine, Pferde, Schafe, Geflügel, Kaninchen, Katzen, Hunde, Fische und Ziergeflügel.

25. Verwendung des Zusatzstoffes nach Anspruch 24, **dadurch gekennzeichnet, daß** der Zusatzstoff in einer solchen Konzentration dem Futtermittel und/oder dem Trinkwasser zugemischt wird, daß dem Tier mit der Futtermittel- bzw. Trinkwasseraufnahme das aus den Komponenten a) bis c) bestehende Gemisch in einer täglichen Konzentration zwischen 5 mg bis 2.000 mg, vorzugsweise zwischen 25 mg und 500 mg, jeweils pro Kilogramm Lebendgewicht, zugeführt wird.

26. Futtermittel enthaltend einen Zusatzstoff nach einem der Ansprüche 1 bis 23.

27. Futtermittel nach Anspruch 26, **dadurch gekennzeichnet, daß** das Futtermittel den Zusatzstoff in einer Konzentration zwischen 200 g/t Futter und 1.000 g/t Futter, insbesondere in einer Konzentration zwischen 450 g/t Futter und 550 g/t Futter, aufweist.

## Claims

1. An additive for an animal food or for drinking water for animals, especially for cattle, pigs, horses, sheep, poultry, rabbits, cats, dogs, fish and cage-birds, **characterized in that** the additive is a mixture and that the mixture has at least the following components listed under a) through c),
a) choline, betaine, carnitine, methylmethionine and/or phosphatidylcholine,
b) N-acylethanolamine and/or N-acylphosphatidylethanolamine with a C₁ -C₂₂ acyl group, and
c) methylglycine and/or dimethylglycine

2. The additive according to claim 1, **characterized in that** the choline is a glycerophosphocholine and/or a lysophosphatidylcholine.

3. The additive according to claim 1 or 2, **characterized in that** the additive contains as betaine a fatty acid and/or a fatty acid salt of betaine and/or a mixture of betaine with at least one fatty acid and/or a fatty acid salt.

4. The additive according to one of the preceding claims, **characterized in that**, a fatty acid salt of betaine is contained in the additive as component a).

5. The additive according to claim 4, **characterized in that** the fatty acid or the fatty acid salt possesses a main carbon chain with 12 to 22 carbon atoms.

6. The additive according to claim 4 or 5, **characterized in that** the fatty acid salt of betaine is a betaine laurate, a betaine myristate, a betaine palmitate, a betaine stearate, a betaine oleate and/or a betaine linolate.

7. The additive according to one of the preceding claims, **characterized in that** the additive has N-acylethanolamine as component b), wherein the N-acylethanolamine possesses a C₁₀ -C₁₈ acyl group, preferably a predominantly saturated and unbranched C₁₀ -C₁₈ acyl group.

8. The additive according to one of the preceding claims, **characterized in that** as N-acylethanolamine an N-capronoylethanolamine, N-capryloylethanolamine, N-caprinoylethanolamine N-laurinoylethanolamine, N-myristinoylethanolamine, N-oleoylethanolamine, N-linolenoylethanolamine, N-cocoylethanolamine and/or N-palmitinoylethanolamine is contained in the additive.

9. The additive according to one of the preceding claims, **characterized in that** the additive contains as component a) betaine, as component b) N-acylethanolamine with a predominantly saturated and unbranched C₁₀ - C₁₈ acyl group and as component c) methylglycine.

10. The additive according to one of the preceding claims, **characterized in that** the mass ratio of the component a) to the component b) and to the component c) varies between 1:1:1 and 1:10:1.

11. The additive according to one of the preceding claims 1 through 9, **characterized in that** the mass ratio of the component a) to the component b) and to the component c) varies between 1:1:1 and 10:1:1.

12. The additive according to one of the preceding claims 1 through 9, **characterized in that** the mass ratio of the component a) to the component b) and to the component c) varies between 1:1:1 and 1:1:10.

13. The additive according to one of the preceding claims, **characterized in that** the additive as component a) has betaine in a concentration between 18 wt% and 25 wt%, as component b) N-acylethanolamine in a concentration between 5 wt% and 12 wt%, and as component c) methylglycine in a concentration between 0,8 wt% and 3 wt%, in each case relative to the ready-to-use additive.

14. The additive according to one of the preceding claims, **characterized in that** the additive is present as powder or granulate.

15. The additive according to claim 14, **characterized in that** the granulate has a grain size between 0,5 mm and 20 mm, wherein the mixture of the components a) through c) is adsorbed on a carrier.

16. The additive according to claim 14 or 15, **characterized in that** the additive contains a carrier, especially a carbohydrate and preferably a maltodextrine.

17. The additive according to one of claims 1 trough 13, **characterized in that** the additive is an aqueous solution or an aqueous dispersion of the mixture, comprising of the components a) through c).

18. The additive according to claim 17, **characterized in that** the aqueous solution or dispersion contains a dispersion agent based on lecithine, and/or phospholipids.

19. The additive according to claim 18, **characterized in that** lecithine, especially crude lecithine and/or modified lecithine is contained in the additive as a dispersion agent.

20. The additive according to one of the preceding claims, **characterized in that** the additive in addition to the mixture additionally contains at least one other ingredient, which is selected from the group which comprises the carbohydrates, phospholipids, lecithines, proteins, enzymes, minerals, vitamins, trace elements, amino acids, antioxidants, fats and oils.

21. The additive according to claim 20, **characterized in that** the additive has between
10 - 30 wt% carbohydrates
5 - 30 wt% proteins
1 - 10 wt% lecithines, preferably phospholipids,
1 - 20 wt% fats and/or oils, and
0,1 - 20 wt% of the mixture, consisting of the components a) through c).

22. The additive according to claims 1 through 20, **characterized in that** the additive contains between
18 - 25 wt% betaine
5 - 12 wt% N-acylethanolamine
0,8 - 5 wt% methylglycine
18 - 25 wt% lecithine
38 - 44 wt% maltodextrine and
3 - 9 wt% sodium caseinate.

23. The additive according to claim 22, **characterized in that** the additive contains between
21 - 23 wt% betaine
7 - 8 wt% N-palmitinoylethanolamine
1,5 - 2,5 wt% methylglycine
21 - 23 wt% oil-free lecithine
39 - 42 wt% maltodextrine and
5,5 - 6,5 wt% sodium caseinate.

24. Use of the additive according to one of the preceding claims for mixing with animal food and/or drinking water for animals, especially for cattle, pigs, horses, sheep, poultry, rabbits, cats, dogs, fish and cae-birds.

25. The use of the additive according to claim 24, **characterized in that** the additive is mixed in such concentration to the animal food and/or to the drinking water that from the mixture comprising components a) through c) is fed to the animal with the animal food or drinking water consumption in a daily concentration between 5 mg and 2.000 mg, preferably between 25 mg and 500 mg, in each case per kilogram of living weight.

26. Animal food containing an additive according to one of claims 1 through 23.

27. Animal food according to claim 26, **characterized in that** the animal food has the additive in a concentration between 200 g/t of animal food and 1000 g/t of animal food, especially between 450 g/t of animal food and 550 g/t of animal food.

## Revendications

1. Additif pour un produit d'alimentation animale ou pour l'eau de boisson destinée aux animaux, en particulier à des bovins, des porcs, des chevaux, des ovins, des volailles, des lapins, des chats, des chiens, des poissons et des oiseaux d'omement, **caractérisé en ce que** l'additif est un mélange et que le mélange présente au moins les composants repris ci-après sous a) à c) :
a) de la choline, de la bétaïne, de la camitine, de la méthylméthionine et/ou de la phosphatidylcholine,
b) de la N-acyléthanolamine et/ou de la N-acyl-phosphatidyléthanolamine comportant un radical acyle en C₁ à C₂₂, et
c) de la méthylglycine et/où de la diméthylglycine.

2. Additif selon la revendication 1, **caractérisé en ce que** la choline est une glycérophosphocholine et/ou une lysophosphatidylcholine.

3. Additif selon la revendication 1 ou 2, **caractérisé en ce que** l'additif cotent en tant que bétaïne un acide gras et/ou un sel d'acide gras de la bétaïne et/ou un mélange de bétaïne et d'au moins un acide gras et/ou un sel d'acide gras.

4. Additif selon l'une quelconque des revendications qui précèdent, **caractérisé en ce que** l'additif contient en tant que composant a) un sel d'acide gras de la bétaïne.

5. Additif selon la revendication 4, **caractérisé en ce que** l'acide gras ou le sel d'acide gras possède une chaîne principale carbonée comportant de 12 à 22 atomes de carbone.

6. Additif selon la revendication 4 ou 5, **caractérisé en ce que** le sel d'acide gras de la bétaïne est un laurate de bétaïne, un myristate de bétaïne, un palmitate de bétaïne, un stéarate de bétaïne, un oléate de bétaïne, et/ou un linoléate de bétaïne.

7. Additif selon l'une quelconque des revendications qui précèdent, **caractérisé en ce que** l'additif présente en tant que composant b) de la N-acylétanolamine, la N-acyléthanolamine possédant un radical acyle en C₁₀ à C₁₈, de préférence un radical acyle en C₁₀ à C₁₈ essentiellement saturé et non ramifié.

8. Additif selon l'une quelconque des revendications qui précèdent, **caractérisé en ce que** la N-acyléthanolamine présente dans l'additif est une N-capronoyl-éthanolamine, une N-capryloyl-éthanolamine, une N-caprinoyl-éthanolamine, une N-laurinoyl-éthanolamine, une N-myristinoyl-éthanolamine, une N-oléoyl-éthanolamine, une N-linolénoyl-éthanolamine, une N-cocoyl-éthanolamine et/ou une N-palmitinoyl-éthanolamine.

9. Additif selon l'une quelconque des revendications qui précèdent, **caractérisé en ce que** l'additif contient en tant que composant a) de la bétaïne, en tant que composant b) de la N-acyléthanolamine comportant un radical acyle en C₁₀ à C₁₈ essentiellement saturé et non ramifié, et en tant que composant c) de la méthylglycine.

10. Additif selon l'une quelconque des revendications qui précèdent, **caractérisé en ce que** la proportion massique du composant a) au composant b) et au composant c) varie entre 1 : 1 : 1 et 1 : 10 : 1.

11. Additif selon l'une quelconque des revendications 1 à 9 qui précèdent, **caractérisé en ce que** la proportion massique du composant a) au composant b) et au composant c) varie entre 1 : 1 : 1 et 10 : 1 : 1.

12. Additif selon l'une quelconque des revendications 1 à 9 qui précèdent, **caractérisé en ce que** la proportion massique du composant a) au composant b) et au composant c) varie entre 1 : 1 : 1 et 1:1:10.

13. Additif selon l'une quelconque des revendications qui précèdent, **caractérisé en ce que** l'additif contient en tant que composant a) de la bétaïne à une concentration comprise entre 18% en poids et 25% en poids, en tant que composant b) de la N-acyléthanolamine à une concentration comprise entre 5% en poids et 12% en poids, et en tant que composant c) de la méthylglycine à une concentration comprise entre 0,8% en poids et 3% en poids, à chaque fois par rapport à l'additif prêt à l'emploi.

14. Additif selon l'une quelconque des revendications qui précèdent, **caractérisé en ce que** l'additif se présente sous forme de poudre ou de granulés.

15. Additif selon la revendication 14, **caractérisé en ce que** les granulés présentent une granulométrie comprise entre 0,5 mm et 20 mm, le mélange des composants a) à c) étant sorbé sur une substance de support.

16. Additif selon la revendication 14 ou 15, **caractérisé en ce que** l'additif contient une substance de support , en particulier un hydrate de carbone et de préférence une maltodextrine.

17. Additif selon l'une quelconque des revendications 1 à 13, **caractérisé en ce que** l'additif est une solution aqueuse ou une dispersion aqueuse du mélange constitué par les composants a) à c).

18. Additif selon la revendication 17, **caractérisé en ce que** la solution ou la dispersion aqueuse contient un agent de dispersion à base de lécithine et/ou de phosholipides.

19. Additif selon la revendication 19, **caractérisé en ce que** l'additif contient en tant qu'agent de dispersion de la lécithine, en particulier de la lécithine brute et/ou de la lécithine modifiée.

20. Additif selon l'une quelconque des revendications qui précèdent, **caractérisé en ce que** l'additif contient, outre le mélange, encore au moins un ingrédient additionnel, lequel est choisi dans le groupe formé par des hydrates de carbone, des phospholipides, des lécithines, des protéines, des enzymes, des substances minérales, des vitamines, des oligo-éléments, des acides aminés, des antioxydants, des graisses et des huiles.

21. Additif selon la revendication 20, **caractérisé en ce que** l'additif présente :
de 10 à 30% en poids d'hydrates de carbone,
de 5 à 30% en poids de protéines,
de 1 à 10% en poids de lécithines, de préférence des phospholipides,
de 1 à 20% en poids de graisses et/ou d'huiles, et
de 0,1 à 20% en poids du mélange constitué des composants a) à c).

22. Additif selon l'une quelconque des revendications 1 à 20, **caractérisé en ce que** l'additif contient :
de 18 à 25% en poids de bétaïne,
de 5 à 12% en poids de N-acétyléthanolamine,
de 0,8 à 5% en poids de méthylglycine,
de 18 à 25% en poids de lécithine,
de 38 à 44% en poids de maltodextrine et
de 3 - 9% en poids de caséinate de sodium.

23. Additif selon la revendication 22, **caractérisé en ce que** l'additif contient :
de 21 à 23% en poids de bétaïne,
de 7 à 8% en poids de N-palmitinoyl-éthanolamine,
de 1,5 à 2,5% en poids de méthylglycine,
de 21 à 23% en poids de lécithine déshuilée,
de 39 à 42% en poids de maltodextrine et
de 5,5 à 6,5% en poids de caséinate de sodium.

24. Utilisation de l'additif selon l'une quelconque des revendications qui précèdent en ajout à un produit d'alimentation animale et/ou à l'eau de boisson destinée aux animaux, en particulier pour des bovins, des porcs, des chevaux; des ovins, des volailles, des lapins, des chats, des chiens, des poissons et des oiseaux d'omement.

25. Utilisation de l'additif selon la revendication 24, **caractérisée en ce que** l'additif est mélangé au produit d'alimentation animale et/ou à l'eau de boisson en une concentration telle que l'on administre aux animaux, avec le produit d'alimentation animale et/ou l'eau de boisson, le mélange constitué des composants a) à c) en une concentration quotidienne comprise entre 5 mg et 2000 mg, de préférence entre 25 mg et 500 mg, à chaque fois par kg de poids corporel.

26. Produit d'alimentation animale contenant un additif selon l'une quelconque des revendications 1 à 23.

27. Produit d'alimentation animale selon la revendication 26, **caractérisé en ce que en ce que** l'aliment contient l'additif en une concentration comprise entre 200 g/tonne d'aliment et 1000 g/tonne d'aliment, en particulier en une concentration comprise entre 450 g/tonne d'aliment et 550 g/tonne d'aliment.
